# EUROPEAN PATENT APPLICATION

(11) **EP 4 394 633 A1**
(43) Date of publication of application: **03.07.2024**
(21) Application number: 23220273.9
(22) Date of filing: 27.12.2023
(51) Int. Cl.: G06F 21/57, G06F 8/60, G06F 8/65, G06F 8/71, G06F 9/445, G06Q 10/0633, H04L 67/00

(54) **SYSTEMS AND METHODS FOR CONTEXT-AWARE CHANGE MANAGEMENT**

(30) Priority: 29.12.2022 US 202263435858 P
(71) Applicant: Palantir Technologies Inc., Denver, CO 80202 (US)
(72) Inventor: SHASHI, Aditya, Denver, 80202 (US); DeARMENT, Gregory, Denver, 80202 (US); DANG, Hao, Denver, 80202 (US); BALE, Philip, Denver, 80202 (US); NIEMI, Richard, Denver, 80202 (US); PATEL, Shardool, Denver, 80202 (US); OKAMOTO, Takashi, Denver, 80202 (US); HOU, Wenshuai, Denver, 80202 (US)
(74) Representative: Sayer, Robert David

(57) **Abstract**

Methods and systems for context-aware change management include performing the operations of: receiving a change request for a software service, the change request comprising change metadata; automatically obtaining context information for the change request; making a decision on the change request based at least in part on the change metadata and the context information; and setting a change status for the change request.

## Description

### CROSS REFERENCE TO RELATED APPLICATION

This application claims priority to U.S. Provisional Application No. 63/435,858, filed December 29, 2022, which is incorporated by reference herein in its entirety for all purposes.

### TECHNICAL FIELD

Certain embodiments of the present disclosure are directed to systems and methods associated with data management. More particularly, some embodiments of the present disclosure provide systems and methods for performing operational change management.

### BACKGROUND

Change management is important for software systems, for example, to avoid outages from simple operator mistakes. For example, many secure networks come with requirements for change approval, such as "any manual change to this environment must be approved by certain persons". Conventional systems are often disconnected from the working context (e.g., the operator), which may burden operators with confusing change workflows (e.g., ticketing workflows) and risk missing enforcement for critical compliance requirements.

Hence it is highly desirable to improve the techniques for performing such change management in order to provide operators with a system that better manages and satisfies such compliance requirements.

### SUMMARY

The scope of protection sought for various embodiments of the invention is set out by the independent claims. Certain embodiments of the present disclosure are directed to systems and methods associated with data management. More particularly, some embodiments of the present disclosure provide systems and methods for performing operational change management.

Disclosed are methods and systems for performing context-aware change management. According to some embodiments, the method includes: receiving a change request for a software service, the change request comprising change metadata; automatically obtaining context information for the change request; making a decision on the change request based at least in part on the change metadata and the context information; and setting a change status for the change request. The method is performed using one or more processors.

According to some embodiments, the system includes one or more memories having instructions stored therein and one or more processors configured to execute the instructions and perform operations. The operations include: receiving a change request for a software service, the change request comprising change metadata; automatically obtaining context information for the change request; making a decision on the change request based at least in part on the change metadata and the context information; and setting a change status for the change request.

According to some embodiments, the method includes: receiving one or more inputs corresponding to one or more change policy parameters; compiling one or more change policy rules based at least in part on the one or more inputs; receiving a change request for a software service, the change request comprising change metadata; automatically obtaining context information for the change request; making a decision on the change request using the one or more change policy rules based at least in part on the change metadata or the context information; and setting a change status for the change request. The method is performed using one or more processors.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

The accompanying drawings are incorporated in and constitute a part of this specification and, together with the description, explain the features and principles of the disclosed embodiments. In the drawings,
FIG. 1 is a simplified diagram showing a method for context-aware change management, according to certain embodiments of the present disclosure;
FIG. 2 is a simplified diagram showing a method for context-aware change management, according to certain embodiments of the present disclosure;
FIG. 3 is an illustrative example of context-aware change management environment, according to certain embodiments of the present disclosure;
FIG. 4 is an example user interface for a user to submit a request, according to certain embodiments of the present disclosure;
FIG. 5 is an example user interface for editing or creating a release channel, according to certain embodiments of the present disclosure; and
FIG. 6 is a simplified diagram showing a computing system for implementing a system for context-aware change management in accordance with at least one example set forth in the disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any number within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Various embodiments of the present disclosure can achieve benefits and/or improvements by a computing system for performing context-aware change management. In some embodiments, benefits include significant improvement in the reliability of the operational change management by reducing the risk of outages suffered by the system due to simple operator mistakes or operational errors, as well as meeting the strict requirements of secure networks, such as requiring approval from users before any manual change to an environment may be made, for example. In certain embodiments, benefits include reducing the risk of missing enforcement for critical compliance requirements, as well as providing operational change management against high-standard compliance and/or high-scale use cases. In some embodiments, benefits include ensuring compliance requirements are satisfied based on both the change type and target, and having the operational change management be tailor-made for specific operator tasks. In certain embodiments, benefits include providing the change management system with the capability to power large-scale software operations for mission-critical use cases.

At least some embodiments of the present disclosure are directed to system and methods for context-aware change management. In certain embodiments, a change management system receives a change request and obtains additional context information. In some embodiments, the context information includes one or more of requester information, type of request, type of data accessed, software change information, runtime environment information, approver information, and/or the like. In certain embodiments, the context management system makes a decision with regard to the change request based at least in part on the additional context information. In some embodiments, if the change request is approved, the change management system implements or initiates an implementation of the requested change.

According to certain embodiments, change management is important for software systems, for example, to avoid outages from simple operator mistakes. In some examples, many secure networks come with requirements for change approval, such as "any manual change to this environment must be approved by certain persons". In certain examples, the conventional systems are disconnected from the working context (e.g., the operator). In some examples, this burdens operators with confusing change workflows (e.g., ticketing workflows), and risks missing enforcement for critical compliance requirements.

According to some embodiments, the change management system can provide operational change management against high-standard compliance and/or high-scale use cases. In certain embodiments, the change management system (e.g., a change management module, a change management service) is embedded within a workflow (e.g., development, security, and/or operation (DevSecOps) workflow), for example, to ensure compliance requirements are satisfied based on both the change type and target, and is tailor-made for specific operator tasks (e.g., continuous delivery operator tasks). In some embodiments, the change management system can power large-scale (e.g., enterprise-level) software operations for mission-critical use cases, for example, at a selected scale.

According to certain embodiments, the change management system is embedded within a workflow (e.g., operator workflow). In some embodiments, the change management system receives global change requests and provide global audits. In certain embodiments, the change management system can evaluate in-context change requests (pending, past) based on the entity in question. In some embodiments, the change management system can evaluate component-level change request proposal directly in-context. In certain embodiments, the change management system can evaluate component-level pending change requests in-context for discovery.

According to certain embodiments, the change management system can be used to satisfy compliance requirements based on both the change type and target, and/or provide guarantees. In some embodiments, the change management system can manage requirements based on change type including, for example, imperative action, declarative state update, settings change, behavior change, and/or the like. In certain embodiments, the change management system can manage requirements based on environment types including, for example, the entity type, high-compliance environment, product attributes, and/or the like. In some embodiments, the change management system can implement an approval standard (e.g., organizational standards, modeling policies, etc.) including auto-approval, or additional mandatory approval. In some embodiments, the change management system can integrate third party requirements through a software interface (e.g., webhook callbacks) for external ticketing or custom engine. In certain embodiments, a software interface includes an application programming interface (API), a web service interface, retrieving information from a file, retrieving information from a data repository, and/or the like.

According to some embodiments, the change management system performs one or more continuous delivery operator tasks. In certain embodiments, the change management system is able to approve both actions (e.g., imperative actions) and state updates (e.g., status updates, declared state updates). In some embodiments, the change management system automatically applies changes after approval (e.g., request approval, ticket approval). In certain embodiments, the change management system performs change (e.g., bulk change, change to multiple systems) and review while enforcing compliance guarantees. For example, the change management system performs effective operations at scale (e.g., restart actions). In some embodiments, the change management system allows automated approval for many requests. In certain embodiments, the change management system allows automated approval for multiple running environments.

According to certain embodiments, a conventional ticket management is generalized, but it requires a user to discover the ticketing workflow, prior tickets, and the self-serve or granular control. In some embodiments, a conventional request system manages requests in text files, but it does not support continuous delivery type of user experience. In certain embodiments, the conventional system pulls requests issued for these text files lack context about what is in them, such that it is challenging to address different change types and compliance requirements, for example, lack of explanation.

According to certain embodiments, the change management system may use one or more computing models. In certain embodiments, a computing model, also referred to as a model includes, for example, an artificial intelligence ("AI") model, a machine learning ("ML") model, a deep learning ("DL") model, an image processing model, an algorithm, a rule, other computing models, a large language model ("LLM"), and/or a combination thereof. In certain embodiments, systems and methods of the present disclosure are directed to obtaining context information, making a decision on the change request, and/or setting the change status using one or more LLMs.

According to certain embodiments, a language model is a computing model that can predict the probability of a series of words, for example, based on the text corpus on which it is trained. In some embodiments, a language model can infer word probabilities from context. In some embodiments, a language model can generate word combinations (and/or sentences) that are coherent and contextually relevant. In certain embodiments, a language model can use a computing model that has been trained to process, understand, generate, and manipulate language. In some embodiments, a language model can be useful for natural language processing, including receiving natural language prompts and providing natural language responses, speech recognition, natural language understandings, and/or the like. In certain embodiments, a language model includes an n-gram, exponential, positional, neural network, and/or other type of model.

According to some embodiments, a large language model ("LLM") is a type of language model that has been trained on a larger data set and has a larger number of parameters (e.g., billions of parameters) compared to a regular language model. In certain embodiments, an LLM can understand more complex textual inputs and generate more coherent responses due to its extensive training. In certain embodiments, an LLM can use a transformer architecture that is a deep learning architecture using an attention mechanism (e.g., which inputs deserve more attention than others in certain cases). In some embodiments, a language model includes an autoregressive language model, such as a Generative Pre-trained Transformer 3 (GPT-3) model, a GPT 3.5-turbo model, a Claude model, a command-xlang model, a bidirectional encoder representations from transformers (BERT) model, a pathways language model (PaLM) 2, and/or the like.

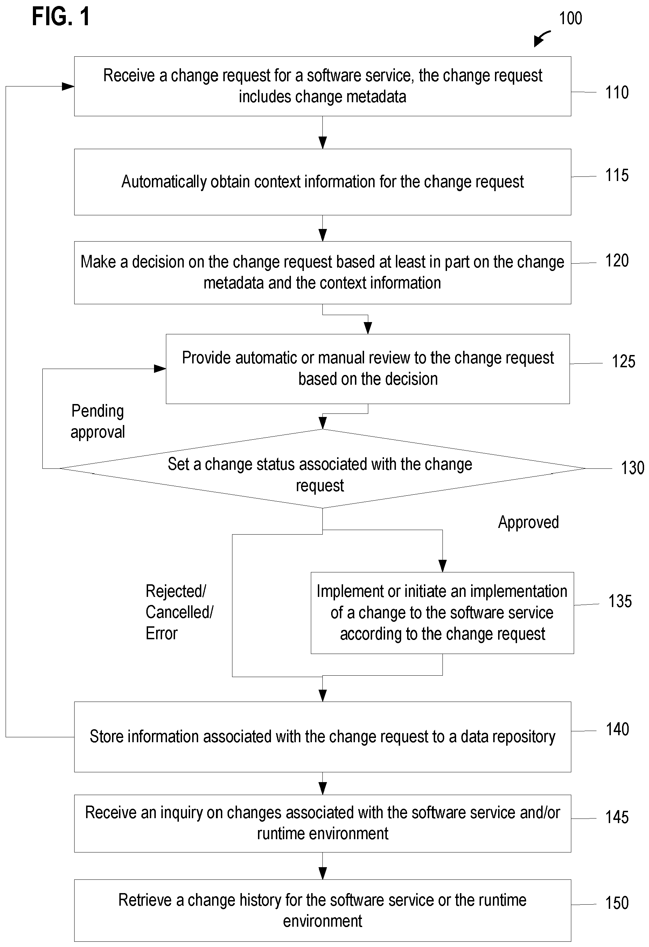

FIG. 1 is a simplified diagram showing a method 100 for context-aware change management according to certain embodiments of the present disclosure. This diagram is merely an example. One of ordinary skill in the art would recognize many variations, alternatives, and modifications. The method 100 for context-aware change management includes processes 110, 115, 120, 125, 130, 135, 140, 145, and 150. Although the above has been shown using a selected group of processes for the method 100 for context-aware change management, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 100 are performed by a system (e.g., the computing system 600). In certain examples, some or all processes (e.g., steps) of the method 100 are performed by a computer and/or a processor directed by a code. For example, a computer includes a server computer and/or a client computer (e.g., a personal computer). In some examples, some or all processes (e.g., steps) of the method 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 110, the system receives a change request for a software service. In certain embodiments, the software service can be a software system, a running instance of a software product of a specific release (e.g., a specific version), a software component in a software product, and/or the like. In some embodiments, the software service refers to software service running within a runtime environment (e.g., a production environment, a beta testing environment, a pilot environment, a development environment, an environment of an organization, etc.), also referred to as an environment. In certain embodiments, a software service includes multiple instances of a same version of the software service running in various runtime environments. In some embodiments, a software service includes multiple instances of different versions of the software service running in various runtime environments.

In certain embodiments, the change request includes change information, also referred to as change metadata. In some embodiments, the change metadata includes one or more of change title, change description, software product information, requester information, and/or the like.

According to certain embodiments, at process 115, the system automatically obtains context information associated with the change request. In some embodiments, the context information includes at least one of a type of the change request, requester information, runtime environment of the software service, installation information of the software service, an entity associated with the software service, approver information, and/or the like. In certain embodiments, the type of change request includes at least one selected from a group consisting of modifying an installation configuration, modifying a setting, adding a setting, modifying a release channel, adding a release channel, deleting a release channel, adding a software service, changing modifying software service, deleting a software service, adding a software component to a software service, modifying a software component in a software service, deleting a software component in a software service, and/or the like. In some embodiments, the context information is automatically obtained when the change request is submitted. In certain embodiments, a part of the context information is automatically retrieved from a data repository, for example, based on change metadata and/or other context information.

In some embodiments, the change management system can receive one or more inputs (e.g., user inputs, inputs via a software interface, one or more prompts), and uses a machine learning model (e.g., a language model, an LLM) to generate, based at least in part on the one or more inputs, one or more change requests. In certain embodiments, the one or more change requests may be generated based on outputs predicted by a machine learning model (e.g., a language model, an LLM, etc.). In some embodiments, the machine learning model (e.g., the language model, the LLM, etc.) is trained by training data including at least one selected from a group consisting of historical change requests, historical context information, historical change metadata, and historical change statuses.

In a model training for the machine learning model (e.g., a language model training, an LLM training, etc.), text information from the training data (e.g., the change metadata of the change requests) is tokenized to generate a plurality of tokens which the model uses during the training to predict the next token in a plurality of consecutive tokens. In some examples, the model training may be facilitated via data parallelism in that the training data is split across multiple processing units such as graphics processing units (GPUs) such that each processing unit trains a copy of the model. In certain examples, model parallelism may be implemented such that parameters and computation for the machine learning model are split across a plurality of processing units by partitioning the model into a plurality of partitions (e.g., layers), each of which is assigned to one of the plurality of processing units. Other forms of parallelism such as pipeline parallelism and tensor parallelism, as well as a hybrid parallelism combining the aforementioned parallelisms, may be implemented as suitable in performing distributed deep learning for the machine learning model (e.g., the language model, the LLM, etc.). According to certain embodiments, the change requests may be generated based on processing the one or more inputs (e.g., prompts) using one or more models, where the one or more models include but are not limited to transformer models, recurrent neural networks (RNNs), and/or any other suitable type of LLM.

In certain embodiments, the change management system may receive a prompt (e.g., one or more inputs via user inputs and/or via a software interface, etc.) and use the one or more models (e.g., one or more language models, one or more LLMs) to generate, based at least in part on the prompt or descriptions therein, one or more change request lists, by filtering over various properties (e.g., key properties) associated with the change request, for example, to help focus reviewers or authors to the changes that matter to them. In such examples, the one or more models can be trained using specific training data including, for example, a dataset of change request lists including change request properties (e.g., key properties) that were previously generated based on previous change requests (e.g., historical change requests).

According to some embodiments, at process 120, the system makes a decision on the change request based at least in part on the change metadata and/or the context information. In certain embodiments, the decision is automatically made. In certain embodiments, the system makes the decision on the change request using a set of approval rules based at least in part on the change information and the context information. In some embodiments, the decision is made based on an approval policy, for example, an approval policy specific to an environment and/or the software service in the environment. In certain embodiments, the approval policy is represented as a set of approval rules representing approval requirements. In some embodiments, the set of approval rules includes a rule data structure using a tree data structure. In certain embodiments, the set of approval rules uses a hierarchical data structure (e.g., a tree data structure). In certain embodiments, the set of approval rules include a rule for a change type, a rule for a requester type, a rule for certain runtime environment parameters, a rule for a compliance requirement, a rule for an organization type, and a rule for an approver type.

In some embodiments, a rule for a first change type (e.g., add a software service) requires a first approval process that is different from a second approval process for a second change type (e.g., modifying a software service). In some examples, the first approval process includes an approval for a first approver that is different from a second approver for the second approval process. In certain examples, the first approval process includes at least one additional step (e.g., manual approval step) than the second approval process. In some examples, the first approval process includes at least one step that is different from the steps in the second approval process.

In some embodiments, the set of approval rules include a rule related to one or more additional conditions, for example, compliance requirements, regulations requirements, etc. In certain embodiments, a rule on a compliance requirement (e.g., IL4 (Impact Level 4), IL5 (Impact Level 5)), also referred to as a regulation requirement, requires one or more additional approval steps and/or different approval steps. In some embodiments, a rule on an organization type includes a first rule for a first organization type (e.g., a company) that is different from a second rule for a second organization type (e.g., a government organization). In certain embodiments, a rule for certain runtime environment parameters includes a first rule for a first environment that is different from a second rule for a second environment. In certain embodiments, the decision can be, based on the set of approval rules, the change metadata, and/or the context information, auto-approval, auto-rejection, conditioned upon review approval, and/or the like.

According to certain embodiments, at process 125, the system provides automated or manual approval to the change request based on the decision. In some embodiments, the system reviews the change request based on the set of approval rules automatically. In certain embodiments, the system sends the change request for one or more approvers to review based on the set of approval rules and receives the approval decision from the one or more approvers.

According to some embodiments, at process 130, the system sets a change status associated with the change request based on the reviews. In certain embodiments, change requests have several potential statuses. In some embodiments, the change request statuses include an approved status indicating that the change has satisfied all compliance and other reviewer requirements and has been or to be applied. In certain embodiments, the change request statuses include a pending approval status where one or more approvers must still submit a review for this change. In some embodiments, the change request statuses include a rejected status indicating that the change was rejected by one of the reviewers (e.g., approvers) and must be edited to resubmit for approver review. In certain embodiments, the change request statuses include a cancelled status indicating that the change was cancelled by its requester (e.g., the author). In some embodiments, the change request statuses include an error status indicating that the change request failed some validations (e.g., automated validations, manual validations) and/or the requester should take action based on the surfaced error message.

According to certain embodiments, the system goes to different processes depending on the change status associated with the change request. In some embodiments, if the status is pending approval, the system goes back to the automatic or manual review process 125. In certain embodiments, if the status is approved, at process 135, the system implements or initiates an implementation of a change to the software service according to the change request. For example, a new software service is implemented and deployed according to the change request. As an example, a release channel is changed according to the change request. In some embodiments, at process 140, the system stores information associated with the change request to a data repository. In certain embodiments, if the status is rejected, cancelled, or error, the system goes to process 140, to store information associated with the change request to a data repository. In some embodiments, the system maintains a change history for one or more change requests for one or more software services, for example, in one or more runtime environments. In certain embodiments, the system goes back to process 110 for additional change requests or an updated change request.

According to some embodiments, at process 145, the system receives an inquiry on changes associated with the software service and/or a runtime environment. In certain embodiments, the system compiles a filter based at least in part on the inquiry. In some embodiments, the system generates the filter based at least in part on the inquiry, using one or more machine learning models (e.g., language models, large language models). In certain embodiments, the filter is based on a change type, a requester, a runtime environment, a compliance requirement, an approver or a type of approver, and/or the like. In some embodiments, the filter is generated using the one or more machine learning models based on a change type, a requester, a runtime environment, a compliance requirement, an approver or a type of approver, and/or the like. In certain embodiments, the one or more machine learning models are trained using training data including historical data of change types, requesters, runtime environments, compliance requirements, approvers, types of approvers, and/or the like.

In certain embodiments, at process 150, the system retrieves a change history for the software service and/or the runtime environment using the filter, the change history including information for one or more change requests. In some embodiments, the change management system provides a user interface to show information associated with the change request.

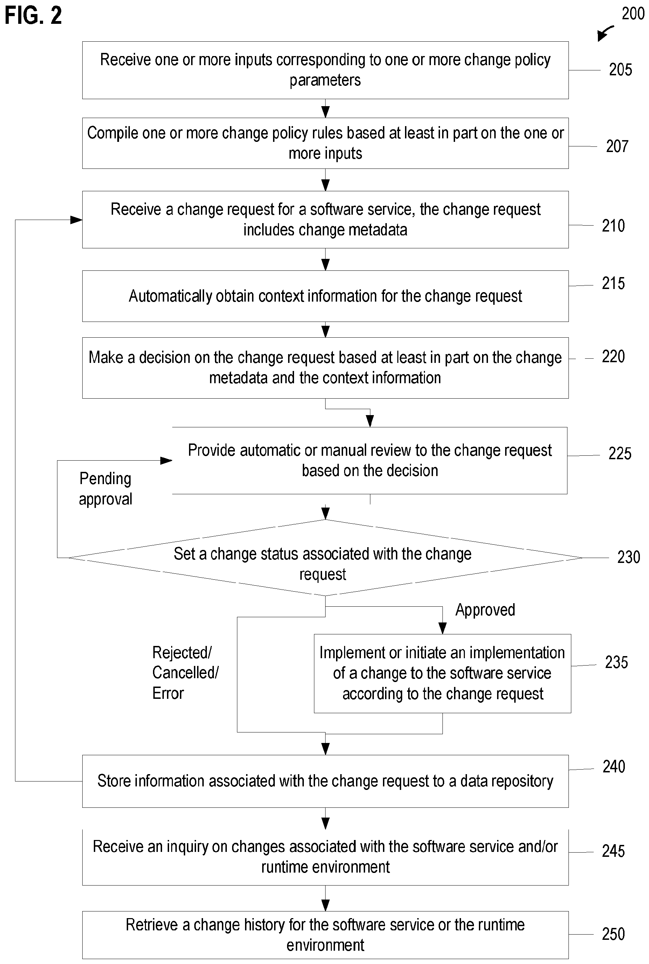

FIG. 2 is a simplified diagram showing a method 200 for context-aware change management according to certain embodiments of the present disclosure. This diagram is merely an example. One of ordinary skill in the art would recognize many variations, alternatives, and modifications. The method 200 for context-aware change management includes processes 205, 207, 210, 215, 220, 225, 230, 235, 240, 245, and 250. Although the above has been shown using a selected group of processes for the method 200 for context-aware change management, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 200 are performed by a system (e.g., the computing system 600). In certain examples, some or all processes (e.g., steps) of the method 200 are performed by a computer and/or a processor directed by a code. For example, a computer includes a server computer and/or a client computer (e.g., a personal computer). In some examples, some or all processes (e.g., steps) of the method 200 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 205, the system receives one or more inputs corresponding to one or more change policy parameters. In certain embodiments, the system receives one or more inputs corresponding to one or more change policy parameters via a user interface. In some embodiments, the system receives one or more inputs corresponding to one or more change policy parameters via a software interface (e.g., API). In certain embodiments, the system is integrated with or interfaced with a software system to receive the one or more change policy parameters. In some embodiments, the change policy parameters include parameters related to one or more change types, one or more requester types, one or more runtime environment parameters, one or more compliance requirements and/or compliance requirement parameters, one or more organization types, one or more approver types, and/or the like.

According to certain embodiments, at process 207, the system compiles one or more change policy rules based at least in part on the one or more inputs. In certain embodiments, the system maintains and uses an approval policy, where the approval policy is represented as a set of approval rules representing approval requirements. In some embodiments, the set of approval rules includes a rule data structure using a tree data structure. In certain embodiments, the set of approval rules uses a hierarchical data structure (e.g., a tree data structure). In certain embodiments, the set of approval rules include a rule for a change type, a rule for a requester type, a rule for certain runtime environment parameters, a rule for a compliance requirement, a rule for an organization type, and a rule for an approver type. In some embodiments, the system compiles the set of approval rules to include the one or more change policy rules.

In some embodiments, a rule for a first change type (e.g., add a software service) requires a first approval process that is different from a second approval process for a second change type (e.g., modifying a software service). In some examples, the first approval process includes an approval for a first approver that is different from a second approver for the second approval process. In certain examples, the first approval process includes at least one additional step (e.g., manual approval step) than the second approval process. In some examples, the first approval process includes at least one step that is different from the steps in the second approval process.

In some embodiments, the set of approval rules include a rule related to one or more additional conditions, for example, compliance requirements, regulations requirements, etc. In certain embodiments, a rule on a compliance requirement (e.g., IL4 (Impact Level 4), IL5 (Impact Level 5)), also referred to as a regulation requirement, requires one or more additional approval steps and/or different approval steps. In some embodiments, a rule on an organization type includes a first rule for a first organization type (e.g., a company) that is different from a second rule for a second organization type (e.g., a government organization). In certain embodiments, a rule for certain runtime environment parameters includes a first rule for a first environment that is different from a second rule for a second environment.

According to some embodiments, at process 210, the system receives a change request for a software service. In certain embodiments, the software service can be a software system, a running instance of a software product of a specific release (e.g., a specific version), a software component in a software product, and/or the like. In some embodiments, the software service refers to software service running within a runtime environment (e.g., a production environment, a beta testing environment, a pilot environment, a development environment, an environment of an organization, etc.), also referred to as an environment. In certain embodiments, a software service includes multiple instances of a same version of the software service running in various runtime environments. In some embodiments, a software service includes multiple instances of different versions of the software service running in various runtime environments.

In certain embodiments, the change request includes change information, also referred to as change metadata. In some embodiments, the change metadata includes one or more of change title, change description, software product information, requester information, and/or the like.

According to certain embodiments, at process 215, the system automatically obtains context information associated with the change request. In some embodiments, the context information includes at least one of a type of the change request, requester information, runtime environment of the software service, installation information of the software service, an entity associated with the software service, approver information, and/or the like. In certain embodiments, the type of change request includes at least one selected from a group consisting of modifying an installation configuration, modifying a setting, adding a setting, modifying a release channel, adding a release channel, deleting a release channel, adding a software service, changing modifying software service, deleting a software service, adding a software component to a software service, modifying a software component in a software service, deleting a software component in a software service, and/or the like. In some embodiment, the context information is automatically obtained when the change request is submitted. In certain embodiments, a part of the context information is automatically retrieved from a data repository, for example, based on change metadata and/or other context information.

According to some embodiments, at process 220, the system makes a decision on the change request based at least in part on the change metadata and/or the context information. In certain embodiments, the decision is automatically made. In certain embodiments, the system makes the decision on the change request using a set of approval rules based at least in part on the change information and the context information. In some embodiments, the decision is made based on an approval policy, for example, an approval policy specific to an environment and/or the software service in the environment. In certain embodiments, the decision can be, based on the set of approval rules, the change metadata, and/or the context information, auto-approval, auto-rejection, conditioned upon review approval, and/or the like.

According to certain embodiments, at process 225, the system provides automated or manual approval to the change request based on the decision. In some embodiments, the system reviews the change request based on the set of approval rules automatically. In certain embodiments, the system sends the change request for one or more approvers to review based on the set of approval rules and receives the approval decision from the one or more approvers.

According to some embodiments, at process 230, the system sets a change status associated with the change request based on the reviews. In certain embodiments, change requests have several potential statuses. In some embodiments, the change request statuses include an approved status indicating that the change has satisfied all compliance and other reviewer requirements and has been or to be applied. In certain embodiments, the change request statuses include a pending approval status where one or more approvers must still submit a review for this change. In some embodiments, the change request statuses include a rejected status indicating that the change was rejected by one of the reviewers (e.g., approvers) and must be edited to resubmit for approver review. In certain embodiments, the change request statuses include a cancelled status indicating that the change was cancelled by its requester (e.g., the author). In some embodiments, the change request statuses include an error status indicating that the change request failed some validations (e.g., automated validations, manual validations) and/or the requester should take action based on the surfaced error message.

According to certain embodiments, the system goes to different processes depending on the change status associated with the change request. In some embodiments, if the status is pending approval, the system goes back to the automatic or manual review process 225. In certain embodiments, if the status is approved, at process 235, the system implements or initiates an implementation of a change to the software service according to the change request. For example, a new software service is implemented and deployed according to the change request. As an example, a release channel is changed according to the change request. In some embodiments, at process 240, the system stores information associated with the change request to a data repository. In certain embodiments, if the status is rejected, cancelled, or error, the system goes to process 240, to store information associated with the change request to a data repository. In some embodiments, the system maintains a change history for one or more change requests for one or more software services, for example, in one or more runtime environments. In certain embodiments, the system goes back to process 210 for additional change requests or an updated change request.

According to some embodiments, at process 245, the system receives an inquiry on changes associated with the software service and/or a runtime environment. In certain embodiments, the system compiles a filter based at least in part on the inquiry. In some embodiments, the filter is based on a change type, a requester, a runtime environment, a compliance requirement, an approver or a type of approver, and/or the like. In certain embodiments, at process 250, the system retrieves a change history for the software service and/or the runtime environment using the filter, the change history including information for one or more change requests. In some embodiments, the change management system provides a user interface to show information associated with the change request.

According to certain embodiments, a change management system can ensure that only high-quality, audited, and/or compliant changes from manual operator actions make their way to production environments. In some embodiments, the change management system includes a set of predetermined types of changes that can be proposed. In certain embodiments, the change management system integrates with or includes approval system and/or approval services to meet ownership and/or compliance requirements for the changes (e.g., change targets).

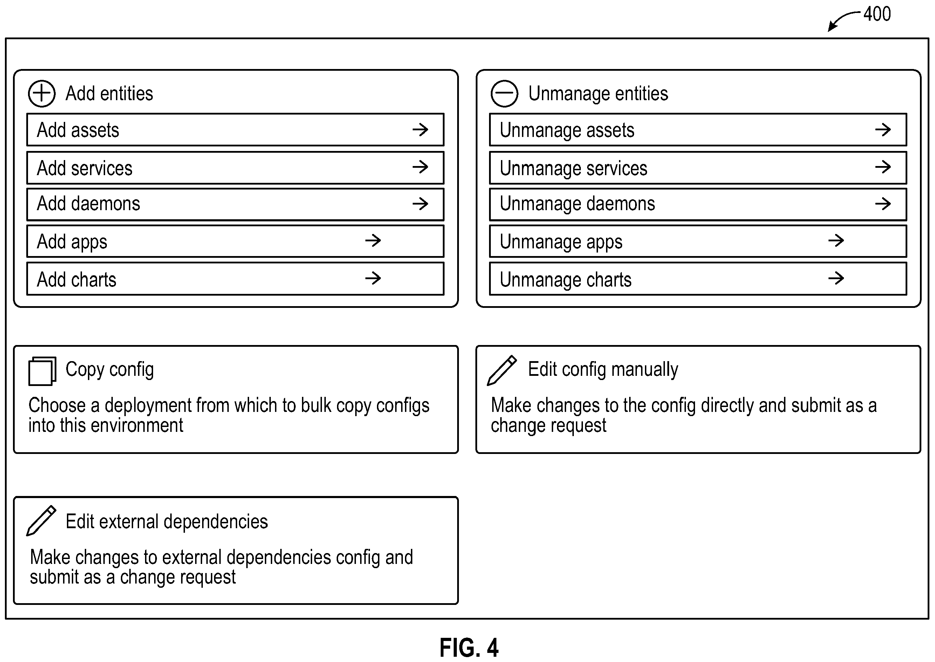

According to some embodiments, there are many types of changes that can be made via an interface including a user interface and/or a software interface. In certain embodiments, the user can access in-context request actions (e.g., requests) in the user interface. In some embodiments, the user can access different request actions and open varying types of change requests. FIG. 4 is an example user interface 400 for a user to submit a request. For example, a user can add assets or services. As an example, a user can select unmanage certain entities. In some examples, a user can copy a change configuration or edit a change configuration to an environment. In certain embodiments, a user can edit external dependencies configuration and submit it as a change request.

According to some embodiments, the change management system can manage change requests for installations and/or installation configurations. In certain embodiments, a change management system can allow service operators to see views provided for change request details for configuration changes. In some embodiments, the change management system can manage change requests for settings and permissions changes within a software platform (e.g., a deployment management platform).

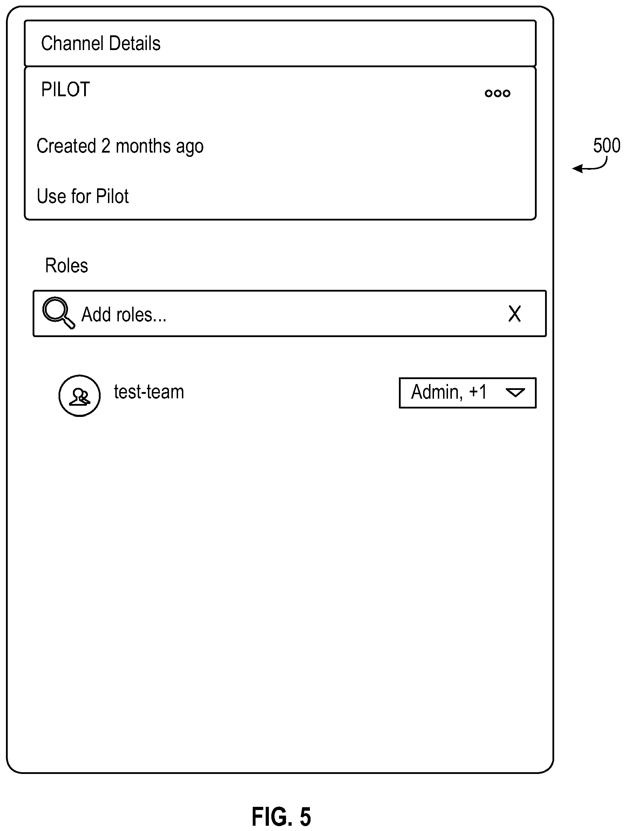

According to certain embodiments, the change management system can manage change requests for an existing setting for a runtime environment, a software product, a software service, or other software concepts. In some examples, a change management system is integrated with a deployment management system and supports the changes allowed in the deployment management system. In certain examples, the change management system can provide change requests to be approved by an administrator for a specific setting. In some embodiments, for changes that introduce a new setting (e.g., creating a new release channel), the change management system may require s a group of administrators (e.g., two or more administrators, per-context administrators) to approve the setting addition. FIG. 5 is an example user interface 500 for editing or creating a release channel, for example, for a deployment management system. For example, the change management system allows setting the type of release channel, roles for the release channel, and submit the change request.

According to some embodiments, a change management system can manage changes to runtime environments, for example, issued as plans by the deployment management system. In certain embodiments, the change management system stores the change information (e.g., change requests, context information, change statuses, change actions, etc.) into one or more data repositories. In some embodiments, the change history can be viewed via a user interface (e.g., globally) of the change management system (e.g., a change request application), or via a more specific context, for example, on runtime environments and installation views.

According to certain embodiments, the change management system provides one or more filtering to generate the change request lists. In some embodiments, the change management system supports filtering over various change request properties (e.g., key properties) to help focus reviewers or authors to the changes that matter to them. In some embodiments, the change management system allows a user to clicking on a specific change in the change request list to open a more detailed view for that change request. In certain embodiments, the change request view provides information about each change in two or more sections. In some embodiments, the change request view includes three sections.

According to some embodiments, the change management system stores change metadata (e.g., change information) including, for example, a title, a description if provided, and the current state of the change request. In certain embodiments, the change metadata is in one selection (e.g., first section). In some examples, the current state of the change request is provided at the top of the change request view.

According to certain embodiments, change requests have several potential statuses, which can be filtered for in a change request view (e.g., change request lists). In some embodiments, the change request statuses include an approved status indicating that the change has satisfied all compliance and other reviewer requirements and has been or to be applied. In certain embodiments, the change request statuses include a pending approval status where one or more approvers must still submit a review for this change. In some embodiments, the change request statuses include a rejected status indicating that the change was rejected by one of the reviewers (e.g., approvers) and must be edited to resubmit for approver review. In certain embodiments, the change request statuses include a cancelled status indicating that the change was cancelled by its requester (e.g., the author). In some embodiments, the change request statuses include an error status indicating that the change request failed some validations (e.g., automated validations, manual validations) and/or the requester should take action based on the surfaced error message. In certain embodiments, the change request status is provided in a section (e.g., second section) of the change request view.

According to some embodiments, change details are provided in a section (e.g., third section) of the change request view. In certain examples, the change details are shown below the change metadata. In some embodiments, the change details include the specific contents of the change. In certain embodiments, the change detail section may depend on the change type. In some embodiments, the change request view includes a first change detail section for a first change request and a second change detail section for a second change request having a change request type different from the first change request, where the first change detail section and the second change detail section have at least one different user interface component. For example, the first change detail section includes a data field that is not in the second change detail section. In certain embodiments, the change request view includes a first change detail section for a first change request and a second change detail section for a second change request having a change request type different from the first change request, where the first change detail section and the second change detail section have different user interface components.

According to certain embodiments, a change request includes context information (e.g., a link back to the context) including, for example, where the change was proposed and enough information for reviewers to understand what changed. In some embodiments, the context information includes information about required for this change request type or the change request, for example by approvers (e.g., reviewers). In certain embodiments, the context information includes information of the runtime environment, the installation information, the entity information, the approvers, and/or the like.

According to some embodiments, each user who has approved a change request may use one or more required review policies. In certain embodiments, the change management system can provide indicators indicative of compliance of the review policies, for example, in a change request view, in a reviewer section. In some embodiments, the change management system can provide approver information (e.g., contact details, link to the approver page, etc.) if requested (e.g., by clicking on the reviewer) and/or a list of approver information.

According to certain embodiments, the change management system can use labels to help categorize and search for change requests. In some embodiments, the change management system can use a special label (e.g., "Do not merge") that can be used to delay change rollout even if all review requirements are satisfied.

According to some embodiments, the change management system can manage approval requirements (e.g., a change policy). In some embodiments, the approval requirements are represented by a set of approval rules. In certain embodiments, the approval requirement includes a requirement that the owner (e.g., owning team) for the entity associated with the change request must approve the change. In some embodiments, the set of approval rules include a rule specifying certain approvers. In certain embodiments, the change management system can obtain the organization information to specify certain approvers for the request.

In some embodiments, for environment settings changes, or for additions or removals of installations on an environment (e.g., a runtime environment), the approval requirements include a requirement that the environment owner is required as a reviewer. In certain examples, the reviewer for changes scoped to an installation may change based on whether operational responsibility is enabled for an environment. In some examples, if operation responsibility is enabled, the responsible party would be the product owner for the installed product, not the environment owner. In certain examples, if there isn't an obvious existing entity associated with a change (for instance, when a new team is being created), an appropriate administrative group will be required to review the change request.

According to certain embodiments, the approval requirements include a requirement based on one or more accreditation and/or compliance requirements (e.g., standards) associated with the entity. In some embodiments, certain compliance teams (e.g., a security team) or user attributes may be required for approvers to changes impacting certain accreditation policies supported by the change request system. In certain embodiments, the change management system configures special compliance groups to pull in for review of changes impacting IL5 (Impact Level 5), FedRAMP (Federal Risk and Authorization Management Program), or other highly regulated security domains.

According to some embodiments, the change management system requires at least one approver for changes in a production environment. In certain embodiments, the change management system has less requirements for a development environment. In some embodiments, the change management system implements different sets of approval rules for different runtime environments. In certain embodiments, the change management system implements different sets of approval rules for the same software service in different runtime environments. In some embodiments, the change management system can provide a workflow and/or user interface for an auditor to evaluate compliance, inspect changes, and/or perform other auditing actions. In certain examples, the change management system can allow an auditor to understand that context that a change request was captured, and ensure that the change request has actually satisfied those compliance requirements.

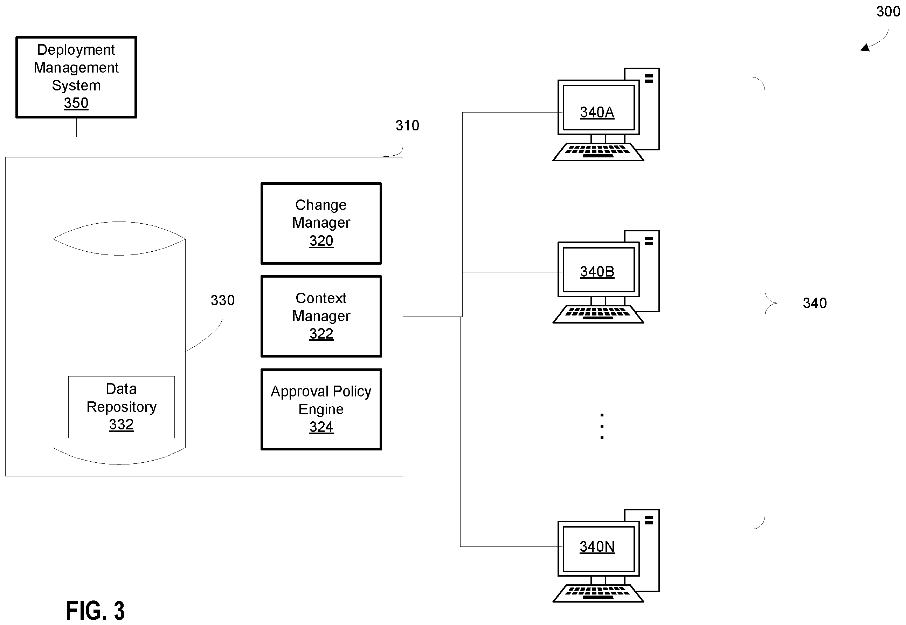

FIG. 3 is an illustrative example of context-aware change management environment 300, according to certain embodiments of the present disclosure. FIG. 3 is merely an example. One of the ordinary skilled in the art would recognize many variations, alternatives, and modifications. According to certain embodiments, context-aware change management environment 300 includes context-aware change management system 310, the one or more software services and/or runtime environments 340 (e.g., 340A, 340B, ..., 340N), and one or more deployment management systems 350. In some embodiments, the context aware change management system 310 includes one or more change manager 320, one or more context managers 322, one or more approval policy engines 324, one or more storage repositories 330 (including one or more data repositories 332).

Although the above has been shown using a selected group of components in the context-aware change management environment 300, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to some embodiments, the context-aware management system 310 and/or the approval policy engine 324 receives one or more inputs corresponding to one or more change policy parameters. In certain embodiments, the context-aware management system 310 and/or the approval policy engine 324 receives one or more inputs corresponding to one or more change policy parameters via a user interface. In some embodiments, the context-aware management system 310 and/or the approval policy engine 324 receives one or more inputs corresponding to one or more change policy parameters via a software interface (e.g., API). In certain embodiments, the context-aware management system 310 and/or the approval policy engine 324 is integrated with or interfaced with a software system to receive the one or more change policy parameters. In some embodiments, the change policy parameters include parameters related to one or more change types, one or more requester types, one or more runtime environment parameters, one or more compliance requirements and/or compliance requirement parameters, one or more organization types, one or more approver types, and/or the like.

According to certain embodiments, the context-aware management system 310 and/or the approval policy engine 324 compiles one or more change policy rules based at least in part on the one or more inputs. In certain embodiments, the context-aware management system 310 and/or the approval policy engine 324 maintains and uses an approval policy, where the approval policy is represented as a set of approval rules representing approval requirements. In some embodiments, the set of approval rules includes a rule data structure using a tree data structure. In certain embodiments, the set of approval rules uses a hierarchical data structure (e.g., a tree data structure). In certain embodiments, the set of approval rules include a rule for a change type, a rule for a requester type, a rule for certain runtime environment parameters, a rule for a compliance requirement, a rule for an organization type, and a rule for an approver type. In some embodiments, the context-aware management system 310 and/or the approval policy engine 324 compiles the set of approval rules to include the one or more change policy rules.

In some embodiments, a rule for a first change type (e.g., add a software service) requires a first approval process that is different from a second approval process for a second change type (e.g., modifying a software service). In some examples, the first approval process includes an approval for a first approver that is different from a second approver for the second approval process. In certain examples, the first approval process includes at least one additional step (e.g., manual approval step) than the second approval process. In some examples, the first approval process includes at least one step that is different from the steps in the second approval process.

In some embodiments, the set of approval rules include a rule related to one or more additional conditions, for example, compliance requirements, regulations requirements, etc. In certain embodiments, a rule on a compliance requirement (e.g., IL4 (Impact Level 4), IL5 (Impact Level 5)), also referred to as a regulation requirement, requires one or more additional approval steps and/or different approval steps. In some embodiments, a rule on an organization type includes a first rule for a first organization type (e.g., a company) that is different from a second rule for a second organization type (e.g., a government organization). In certain embodiments, a rule for certain runtime environment parameters includes a first rule for a first environment that is different from a second rule for a second environment.

According to some embodiments, the context-aware management system 310 and/or the change manager 320 receives a change request for a software service. In certain embodiments, the software service can be a software system, a running instance of a software product of a specific release (e.g., a specific version), a software component in a software product, and/or the like. In some embodiments, the software service refers to software service running within a runtime environment (e.g., a production environment, a beta testing environment, a pilot environment, a development environment, an environment of an organization, etc.), also referred to as an environment. In certain embodiments, a software service includes multiple instances of a same version of the software service running in various runtime environments. In some embodiments, a software service includes multiple instances of different versions of the software service running in various runtime environments. In certain embodiments, the context-aware management system 310 and/or the change manager 320 receives the change request from the deployment management system, for example, to modify, add, and/or delete an installation, to modify, add, and/or delete a software service, and/or to modify, add, and/or delete a setting.

In certain embodiments, the change request includes change information, also referred to as change metadata. In some embodiments, the change metadata includes one or more of change title, change description, software product information, requester information, and/or the like.

According to certain embodiments, the context-aware management system 310 and/or the context manager 322 automatically obtains context information associated with the change request. In some embodiments, the context information includes at least one of a type of the change request, requester information, runtime environment of the software service, installation information of the software service, an entity associated with the software service, approver information, and/or the like. In certain embodiments, the type of change request includes at least one selected from a group consisting of modifying an installation configuration, modifying a setting, adding a setting, modifying a release channel, adding a release channel, deleting a release channel, adding a software service, changing modifying software service, deleting a software service, adding a software component to a software service, modifying a software component in a software service, deleting a software component in a software service, and/or the like. In some embodiment, the context information is automatically obtained when the change request is submitted. In certain embodiments, a part of the context information is automatically retrieved from the data repository 332, for example, based on change metadata and/or other context information.

According to some embodiments, the context-aware management system 310 and/or the change manager 320 makes a decision on the change request based at least in part on the change metadata and/or the context information. In certain embodiments, the decision is automatically made. In certain embodiments, the context-aware management system 310 and/or the change manager 320 makes the decision on the change request using a set of approval rules based at least in part on the change metadata(e.g., change information) and/or the context information. In some embodiments, the decision is made based on an approval policy, for example, an approval policy specific to an environment and/or the software service in the environment. In certain embodiments, the decision can be, based on the set of approval rules, the change metadata, and/or the context information, auto-approval, auto-rejection, conditioned upon review approval, and/or the like.

According to certain embodiments, the context-aware management system 310 and/or the change manager 320 provides automated or manual approval to the change request based on the decision. In some embodiments, the context-aware management system 310 and/or the change manager 320 reviews the change request based on the set of approval rules automatically. In certain embodiments, the context-aware management system 310 and/or the change manager 320 sends the change request for one or more approvers to review based on the set of approval rules and receives the approval decision from the one or more approvers.

According to some embodiments, the context-aware management system 310 and/or the change manager 320 sets a change status associated with the change request based on the reviews. In certain embodiments, change requests have several potential statuses. In some embodiments, the change request statuses include an approved status indicating that the change has satisfied all compliance and other reviewer requirements and has been or to be applied. In certain embodiments, the change request statuses include a pending approval status where one or more approvers must still submit a review for this change. In some embodiments, the change request statuses include a rejected status indicating that the change was rejected by one of the reviewers (e.g., approvers) and must be edited to resubmit for approver review. In certain embodiments, the change request statuses include a cancelled status indicating that the change was cancelled by its requester (e.g., the author). In some embodiments, the change request statuses include an error status indicating that the change request failed some validations (e.g., automated validations, manual validations) and/or the requester should take action based on the surfaced error message.

According to certain embodiments, the context-aware management system 310 and/or the change manager 320 goes to different processes depending on the change status associated with the change request. In some embodiments, if the status is pending approval, the context-aware management system 310 and/or the change manager 320 goes back to the automatic or manual review process. In certain embodiments, if the status is approved, the context-aware management system 310 and/or the change manager 320 implements or initiates an implementation of a change to the software service according to the change request. For example, a new software service is implemented and deployed according to the change request. As an example, a release channel is changed according to the change request. In some embodiments, the context-aware management system 310 and/or the change manager 320 stores information associated with the change request to the data repository 332. In certain embodiments, if the status is rejected, cancelled, or error, the context-aware management system 310 and/or the change manager 320 goes to the process to store information associated with the change request to the data repository 332. In some embodiments, the context-aware management system 310 and/or the change manager 320 maintains a change history for one or more change requests for one or more software services, for example, in one or more runtime environments. In certain embodiments, the context-aware management system 310 and/or the change manager 320 goes back to the process for additional change requests or an updated change request.

According to some embodiments, the context-aware management system 310 and/or the change manager 320 receives an inquiry on changes associated with the software service and/or a runtime environment. In certain embodiments, the context-aware management system 310 and/or the change manager 320 compiles a filter based at least in part on the inquiry. In some embodiments, the filter is based on a change type, a requester, a runtime environment, a compliance requirement, an approver or a type of approver, and/or the like. In certain embodiments, the context-aware management system 310 and/or the change manager 320 retrieves a change history for the software service and/or the runtime environment using the filter, the change history including information for one or more change requests. In some embodiments, the change management system provides a user interface to show information associated with the change request.

In some embodiments, the repository 330 can include change requests, change metadata, context information, change statuses, approval rules, approval policies, and/or the like. The repository 330 may be implemented using any one of the configurations described below. The data repository 332 may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In some cases, various components in the context-aware change management environment 300 can execute software or firmware stored in non-transitory computer-readable medium to implement various processing steps. Various components and processors of the context-aware change management environment 300 can be implemented by one or more computing devices including, but not limited to, circuits, a computer, a cloud-based processing unit, a processor, a processing unit, a microprocessor, a mobile computing device, and/or a tablet computer. In some cases, various components of the context-aware change management environment 300 (e.g., the context-aware change management system 310, the change manager 320, the context manager 322, the approval policy engine 324, the deployment management system 350, the software services and/or runtime environments 340) can be implemented on a shared computing device. Alternatively, a component of the context-aware change management environment 300 can be implemented on multiple computing devices. In some implementations, various modules and components of the context-aware change management environment 300 can be implemented as software, hardware, firmware, or a combination thereof. In some cases, various components of context-aware change management environment 300 can be implemented in software or firmware executed by a computing device.

In some examples, the one or more change managers 320, the one or more context managers 322, and the one or more approval policy engines 324 may operate in parallel with each other. For example, the one or more change managers 320 may make a decision on a change request based at least in part on the change metadata and/or the context information, in parallel with the one or more context managers 322 obtaining context information associated with a change request. In such cases, the decision made by the one or more change managers 320 may pertain to a first change request, and the context information obtained by the one or more context managers 322 may pertain to a second change request that is different or separate from the first change request, for example. In some examples, the approval policy engine 324 may receive one or more inputs corresponding to one or more change policy parameters, in parallel with the one or more change managers 320 making a decision on a change request and/or the one or more context managers 322 obtaining context information associated with a change request. In such cases, the one or more change policy parameters may pertain to a third change request that is different or separate from the first and second change requests, for example. Although only three change requests (first change request, second change request, and third change requests) are mentioned above, it is to be understood that any number of change requests may be processed in parallel operations using the context-aware change management system 310 and/or components thereof. Beneficially, the parallel operation of the one or more change managers 320, the one or more context managers 322, and the one or more approval policy engines 324 allows the context-aware change management system 310 to simultaneously process a plurality of change requests and expedite the process of setting the change statuses for the plurality of change requests, thereby reducing delays or facilitate a faster response than otherwise possible.

Various components of context-aware change management environment 300 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.3 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

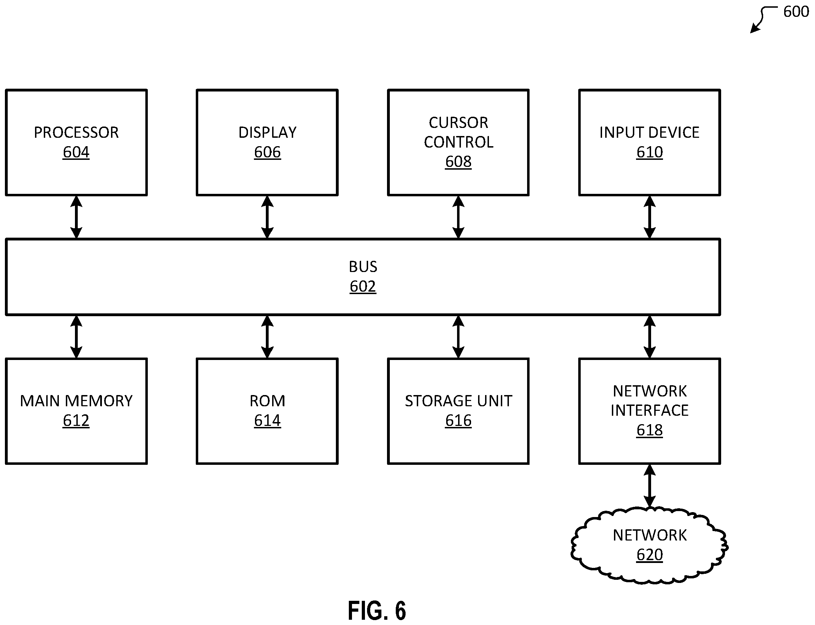

FIG. 6 is a simplified diagram showing a computing system for implementing a system 600 for context-aware change management in accordance with at least one example set forth in the disclosure. This diagram is merely an example, which should not unduly limit the scope of the claims. One of ordinary skill in the art would recognize many variations, alternatives, and modifications.

The computing system 600 includes a bus 602 or other communication mechanism for communicating information, a processor 604, a display 606, a cursor control component 608, an input device 610, a main memory 612, a read only memory (ROM) 614, a storage unit 616, and a network interface 618. In some embodiments, some or all processes (e.g., steps) of the methods 100, and/or 200 are performed by the computing system 600. In some examples, the bus 602 is coupled to the processor 604, the display 606, the cursor control component 608, the input device 610, the main memory 612, the read only memory (ROM) 614, the storage unit 616, and/or the network interface 618. In certain examples, the network interface is coupled to a network 620. For example, the processor 604 includes one or more general purpose microprocessors. In some examples, the main memory 612 (e.g., random access memory (RAM), cache and/or other dynamic storage devices) is configured to store information and instructions to be executed by the processor 604. In certain examples, the main memory 612 is configured to store temporary variables or other intermediate information during execution of instructions to be executed by processor 604. For examples, the instructions, when stored in the storage unit 616 accessible to processor 604, render the computing system 600 into a special-purpose machine that is customized to perform the operations specified in the instructions. In some examples, the ROM 614 is configured to store static information and instructions for the processor 604. In certain examples, the storage unit 616 (e.g., a magnetic disk, optical disk, or flash drive) is configured to store information and instructions.

In some embodiments, the display 606 (e.g., a cathode ray tube (CRT), an LCD display, or a touch screen) is configured to display information to a user of the computing system 600. In some examples, the input device 610 (e.g., alphanumeric and other keys) is configured to communicate information and commands to the processor 604. For example, the cursor control component 608 (e.g., a mouse, a trackball, or cursor direction keys) is configured to communicate additional information and commands (e.g., to control cursor movements on the display 606) to the processor 604.

According to certain embodiments, a method for context-aware change management includes: receiving a change request for a software service, the change request comprising change metadata; automatically obtaining context information for the change request; making a decision on the change request based at least in part on the change metadata and the context information; and setting a change status for the change request, wherein the method is performed using one or more processors. For example, the method is implemented according to at least FIG. 1, FIG. 2, and/or FIG. 3.

In some embodiments, the context information includes at least one selected from a group consisting of a type of the change request, requester information, runtime environment of the software service, installation information of the software service, an entity associated with the software service, and approver information. In certain embodiments, the making a decision on the change request comprising making the decision on the change request using a set of approval rules based at least in part on the change metadata and/or the context information. In some embodiments, the set of approval rules include a rule data structure using a tree structure. In certain embodiments, the set of approval rules include a rule for a change type, a rule for a requester type, a rule for certain runtime environment parameters, a rule for a compliance requirement, a rule for an organization type, and a rule for approver type.

In some embodiments, the set of approval rules include a rule related to one or more additional conditions. In certain embodiments, the method further comprises: if the decision is to approve the change request, initiating an implementation of a change to the software service according to the change request. In some embodiments, the method further comprises: storing information associated with the change request to one or more memories; receiving an inquiry associated with the software service; compiling a filter based at least in part on the inquiry; and retrieving a change history for the software service using the filter, the change history including information for one or more change requests. In some embodiments, the method further comprises: receiving one or more inputs corresponding to one or more change policy parameters; and compiling one or more change policy rules based at least in part on the one or more inputs; wherein the set of approval rules include one or more change policy rules. In certain embodiments, the method further comprises generating, using a large language model based on one or more inputs, the change request.

According to certain embodiments, a system for context-aware change management includes one or more memories having instructions stored therein and one or more processors configured to execute the instructions and perform operations. The operations include: receiving a change request for a software service, the change request comprising change metadata; automatically obtaining context information for the change request; making a decision on the change request based at least in part on the change metadata and the context information; and setting a change status for the change request. For example, the system is implemented according to at least FIG. 1, FIG. 2, FIG. 3, and/or FIG. 6.

In some embodiments, the context information includes at least one selected from a group consisting of a type of the change request, requester information, runtime environment of the software service, installation information of the software service, an entity associated with the software service, and approver information. In certain embodiments, the making a decision on the change request comprising making the decision on the change request using a set of approval rules based at least in part on the change metadata and the context information. In some embodiments, the set of approval rules include a rule data structure using a tree structure or a rule related to one or more additional conditions. In certain embodiments, the set of approval rules include a rule for a change type, a rule for a requester type, a rule for certain runtime environment parameters, a rule for a compliance requirement, a rule for an organization type, and a rule for approver type.

In some embodiments, the operations further include, if the decision is to approve the change request, initiating an implementation of a change to the software service according to the change request. In certain embodiments, the operations further include: storing information associated with the change request to one or more memories; receiving an inquiry associated with the software service; compiling a filter based at least in part on the inquiry; and retrieving a change history for the software service using the filter, the change history including information for one or more change requests. In some embodiments, the operations further include: receiving one or more inputs corresponding to one or more change policy parameters; and compiling one or more change policy rules based at least in part on the one or more inputs, and the set of approval rules include the one or more change policy rules. In certain embodiments, the operations further include generating, using a large language model based on one or more inputs, the change request.

According to certain embodiments, a method for context-aware change management includes: receiving one or more inputs corresponding to one or more change policy parameters; compiling one or more change policy rules based at least in part on the one or more inputs; receiving a change request for a software service, the change request comprising change metadata; automatically obtaining context information for the change request; making a decision on the change request using the one or more change policy rules based at least in part on the change metadata or the context information; and setting a change status for the change request. For example, the method is implemented according to at least FIG. 1, FIG. 2, and/or FIG. 3.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method (100) for context-aware change management, the method comprising:
receiving (110) a change request for a software service, the change request comprising change metadata;
automatically obtaining (115) context information for the change request;
making a decision (120) on the change request based at least in part on the change metadata and the context information; and
setting a change status (130) for the change request;
wherein the method is performed using one or more processors.

2. The method of claim 1, wherein the context information includes at least one selected from a group consisting of a type of the change request, requester information, runtime environment of the software service, installation information of the software service, an entity associated with the software service, and approver information.

3. The method of claim 1 or claim 2, wherein the making a decision on the change request comprising making the decision on the change request using a set of approval rules based at least in part on the change metadata and the context information.

4. The method of claim 3, wherein the set of approval rules include a rule data structure using a tree structure.

5. The method of claim 3 or claim 4, wherein the set of approval rules include a rule for a change type, a rule for a requester type, a rule for certain runtime environment parameters, a rule for a compliance requirement, a rule for an organization type, and a rule for approver type.

6. The method of any one of claims 3 to 5, wherein the set of approval rules include a rule related to one or more additional conditions.

7. The method of any preceding claim, further comprising:
if the decision is to approve the change request, initiating an implementation of a change to the software service according to the change request.

8. The method of any preceding claim, further comprising:
storing information associated with the change request to one or more memories;
receiving an inquiry associated with the software service;
compiling a filter based at least in part on the inquiry; and
retrieving a change history for the software service using the filter, the change history including information for one or more change requests.

9. The method of claim 3 or any claim dependent thereon, further comprising:
receiving one or more inputs corresponding to one or more change policy parameters; and
compiling one or more change policy rules based at least in part on the one or more inputs;
wherein the set of approval rules include the one or more change policy rules.

10. The method of any preceding claim, further comprising:
generating, using a large language model based on one or more inputs, the change request.

11. A method (200) for context-aware change management, the method comprising:
receiving (205) one or more inputs corresponding to one or more change policy parameters;
compiling (207) one or more change policy rules based at least in part on the one or more inputs;
receiving (210) a change request for a software service, the change request comprising change metadata;
automatically obtaining (215) context information for the change request;
making a decision (220) on the change request using the one or more change policy rules based at least in part on the change metadata or the context information; and
setting (230) a change status for the change request;
wherein the method is performed using one or more processors.

12. A system for context-aware change management, the system comprising:
one or more memories having instructions stored therein; and
one or more processors configured to execute the instructions and perform operations in accordance with the method of any preceding claim.
